# EUROPÄISCHE PATENTANMELDUNG

(11) **EP 4 813 587 A1**
(43) Veröffentlichungstag der Anmeldung: **30.09.2026**
(21) Anmeldenummer: 26160526.5
(22) Anmeldetag: 24.02.2026
(51) Int. Cl.: B25J 15/02, B65G 47/92

(54) **GREIFVORRICHTUNG SOWIE ROBOTER MIT EINER GREIFVORRICHTUNG**

(30) Priorität: 28.03.2025 DE 102025112290
(71) Anmelder: Kendrion (Donaueschingen/Engelswies) GmbH, 78166 Donaueschingen (DE)
(72) Erfinder: Deckel, Peter, 78269 Volkertshausen (DE)
(74) Vertreter: Westphal, Mussgnug & Partner Patentanwälte mbB

(57) **Zusammenfassung**

Die vorliegende Erfindung betrifft eine Greifvorrichtung (1), insbesondere elektromagnetische Greifvorrichtung (1) für einen Roboter, zum Greifen eines Gegenstandes, aufweisend einen Hubmagnet (10) mit einem Magnetgehäuse (12) und eine Greifeinheit (30), wobei in dem Magnetgehäuse (12) ein in einer Längsachse (L) beweglicher Anker (14) und ein elektromagnetisches Erregersystem (16) zur Betätigung des Ankers (14) angeordnet ist, wobei die Greifeinheit (30) eine in der Längsachse (L) beweglichen Betätigungsstange (40) und mindestens einen um eine Schwenkachse (X) beweglichen Finger (50) umfasst, wobei der mindestens eine Finger (50) mit der Betätigungsstange (40) derart mechanisch gekoppelt ist, dass die Bewegung der Betätigungsstange (40) in eine Schwenkbewegung des mindestens einen Fingers (50) zum Greifen des Gegenstandes gewandelt wird, wobei die Greifeinheit (30) in der Längsachse (L) auf dem Magnetgehäuse (12) angeordnet ist und wobei die Betätigungsstange (40) mit dem Anker (14) mechanisch verbunden ist. Darüber hinaus betrifft die vorliegende Erfindung einen Roboter mit einer solchen Greifvorrichtung (1).

## Beschreibung

Die vorliegende Erfindung betrifft eine Greifvorrichtung, insbesondere einen elektromagnetischen Winkelgreifer für einen Roboter, zum Greifen eines Gegenstandes mit den Merkmalen des Patentanspruchs 1. Darüber hinaus betrifft die vorliegende Erfindung einen Roboter, insbesondere einen Gelenkarmroboter, mit den Merkmalen des Patentanspruchs 18.

Greifvorrichtungen sind aus dem Stand der Technik in unterschiedlichen Ausgestaltungen vorbekannt. Derartige Greifvorrichtungen werden im Stand der Technik verbreitet dazu eingesetzt, bei der automatisierten Bearbeitung Gegenstände zu handhaben, um sie beispielsweise zuverlässig aufzunehmen und abzulegen. Die jeweilige Greifvorrichtung umfasst dabei mindestens einen Finger, der durch eine Betätigungseinrichtung bewegt werden kann, um den Gegenstand zu greifen. Im Stand der Technik werden Greifvorrichtungen unter anderem in Parallelgreifer, Zentrischgreifer oder Winkelgreifer unterteilt, wobei typischerweise der mindestens eine Finger von Parallel- und Zentrischgreifern translatorisch bewegt wird und der mindestens eine Finger von Winkelgreifern rotatorisch bewegt, also verschwenkt, wird.

Beispielsweise ist aus der DE 10 2004 038 261 A1 ein pneumatischer Winkelgreifer vorbekannt, wobei der Winkelgreifer zwei Finger aufweist, die zum Greifen des Gegenstandes in entgegengesetzte Drehrichtungen verschwenkt werden.

Derartige Greifvorrichtungen haben sich in der Vergangenheit bewehrt. Insbesondere bei der automatisierten Fertigung wird zur Optimierung der Prozesse ein schnelles und verlässliches Greifen von Gegenständen in allen Größen, mit den unterschiedlichsten Geometrien sowie in jeder Umgebung gefordert.

Hier setzt die vorliegende Erfindung an.

Die vorliegende Erfindung widmet sich der Aufgabe, eine in zweckmäßigerweise verbesserte Greifvorrichtung, insbesondere einen elektromagnetischen Winkelgreifer, für einen Roboter zur Verfügung zu stellen, die insbesondere ein besonders schnelles und zuverlässiges Greifen von Gegenständen ermöglicht.

Diese Aufgaben werden durch eine Greifvorrichtung mit den Merkmalen des Patentanspruchs 1 und einen Roboter mit den Merkmalen des Patentanspruchs 18 gelöst.

Weitere vorteilhafte Ausgestaltungen der vorliegenden Erfindung werden in den Unteransprüchen angegeben.

Die erfindungsgemäße Greifvorrichtung, insbesondere der erfindungsgemäße elektromagnetische Winkelgreifer für einen Roboter, zum Greifen eines Gegenstandes mit den Merkmalen des Anspruchs 1 weist einen Hubmagneten mit einem Magnetgehäuse und eine Greifeinheit mit mindestens einem durch den Hubmagneten betätigbaren Finger auf.

In dem Magnetgehäuse sind darüber hinaus ein in einer Längsachse beweglicher Anker und ein elektromagnetisches Erregersystem zur Betätigung des Ankers angeordnet.

Weiterhin umfasst die Greifeinheit eine in der Längsachse bewegliche Betätigungsstange und den mindestens einen um eine Längsachse beweglichen Finger, wobei der mindestens eine Finger mit der Betätigungsstange derart mechanisch gekoppelt ist, dass die Bewegung der Betätigungsstange in eine Schwenkbewegung des mindestens einen Fingers um die Schwenkachse zum Greifen des Gegenstandes gewandelt wird.

Darüber hinaus ist vorgesehen, dass die Greifeinheit in der Längsachse auf dem Magnetgehäuse angeordnet ist und dabei die Betätigungsstange mit dem Anker mechanisch verbunden ist.

Der vorliegenden Erfindung liegt die Idee zugrunde, eine modulare Greifvorrichtung, insbesondere einen modularen Winkelgreifer, mit einer durch einen Hubmagneten betätigbaren Greifeinheit vorzuschlagen. Hubmagnete sind gegenüber pneumatischen Betätigungseinrichtungen wartungsfrei und weisen eine äußerst kompakte Bauform bei einer niedrigen Leistungsaufnahme, hohen Kräften und extrem kurzen Schaltzeiten auf. Insbesondere durch die sehr kurzen Schaltzeiten können die Zyklen verkürzt werden und durch die hohen Kräfte ein sicheres Handhaben der Gegenstände gewährleistet werden.

Durch die vorgeschlagene Greifvorrichtung kann für unterschiedliche Anwendungen eine möglichst große Anzahl von Gleichteilen zur Anwendung kommen. Dabei steht im Vordergrund, dass ein herkömmlicher Hubmagnet verwendet wird. Auf dem Magnetgehäuse des Hubmagneten wird die Greifeinheit als Modul mit dem mindestens einen Finger angeordnet. So können für unterschiedliche Anwendungen baugleiche Hubmagneten verwendet werden und lediglich die Greifeinheit mit seinem gegenstandspezifischen mindestens einen Finger oder sogar nur der Finger kann ausgetauscht werden, wodurch die vorgeschlagene Greifvorrichtung gegenüber bekannten Greifvorrichtungen erhebliche technische Vorteile und Kostenvorteile aufweist.

Weiterbildungsgemäß ist es vorteilhaft, wenn die Greifeinheit entlang der Längsachse eine distale Seite und eine der distalen Seite gegenüberliegende proximale Seite aufweist. Bevorzugt ist der mindestens eine Finger an der distalen Seite angeordnet. Bevorzugt steht der mindestens eine Finger von der distalen Seite der Greifeinheit ab.

Auch ist es weiter bevorzugt, wenn die Greifeinheit mit ihrer proximalen Seite an dem Magnetgehäuse angeordnet ist, insbesondere mit ihrer proximalen Seite an dem Magnetgehäuse befestigt ist. Beispielsweise kann die Greifeinheit ein Greifergehäuse umfassen, welches an dem Magnetgehäuse befestigbar ist.

Darüber hinaus ist es vorteilhaft, wenn mindestens zwei Finger vorgesehen sind. Die mindestens zwei Finger sind bevorzugt rotationssymmentrisch um die Längsachse und/oder den Betätigunsstift angeordnet und sind weiterhin bevorzugt in entgegengesetzte Richtungen verschwenkbar, um den Gegenstand greifen zu können.

Gemäß einer Weiterbildung der vorliegenden Erfindung umfasst der mindestens eine Finger einen Mitnehmer, über den der mindestens eine Finger mit der Betätigungsstange mechanisch gekoppelt ist. Der Mitnehmer des mindestens einen Fingers ist vorzugsweise formschlüssig und/oder reibschlüssig mit der Betätigungsstange gekoppelt. Durch die mechanische Kopplung zwischen dem Mitnehmer und der Betätigungsstange ist eine unmittelbare und sichere Übertragung der Bewegung der Betätigungsstange auf den mindestens einen Finger gewährleistet. Insbesondere ist eine sichere Umsetzung der translatorischen Bewegung der Betätigungsstange in eine rotatorische Bewegung des mindestens einen Fingers gewährleistet.

Darüber hinaus hat es sich als vorteilhaft erwiesen, wenn der mindestens eine Finger an der Greifeinheit und insbesondere an dem Greifergehäuse beweglich, insbesondere schwenkbar, gelagert ist. Insbesondere ist es vorteilhaft, wenn der mindestens eine Finger in einer Ausnehmung des Greifergehäuses angeordnet ist und mittels eines Drehgelenkes in der Ausnehmung an dem Greifergehäuse drehbar gelagert ist. Dadurch ergibt sich eine kompakte und robuste Bauweise.

Weiterhin hat es sich als vorteilhaft erwiesen, wenn der mindestens eine Finger als Hebel ausgebildet ist, der Mitnehmer und ein Haltemittel zum Halten des Gegenstandes umfasst. Beispielsweise kann es vorteilhaft sein, wenn der Mitnehmer einenends an dem Hebel angeordnet ist und das Haltemittel anderenends, wobei vorzugsweise die Schwenkachse zwischen dem Mitnehmer und dem Haltemittel angeordnet ist.

Das Haltemittel kann bevorzugt an den jeweiligen Gegenstand angepasst sein um den Gegenstand sicher zu greifen.

Auch hat es sich als vorteilhaft erwiesen, wenn der mindestens eine Finger als zweiseitiger Hebel ausgebildet ist, der den Mitnehmer einerseits in einem ersten Abstand zu der Schwenkachse und das Haltemittel andererseits in einem zweiten Abstand zu der Schwenkachse umfasst.

Auch hat es sich als vorteilhaft erwiesen, wenn der zweite Abstand größer ist als der erste Abstand, wodurch eine besonders schnelle Bewegung des mindestens einen Fingers zum Öffnen oder Schließen erreicht werden kann.

Darüber hinaus hat es sich als vorteilhaft erwiesen, wenn der Hebel L-förmig ausgebildet ist. Durch die L-förmige Ausgestaltung des als Hebel ausgebildeten mindestens einen Fingers, kann eine besonders kompakte und schlanke Bauweise realisiert werden.

Eine Weiterbildung der vorliegenden Erfindung sieht vor, dass die Betätigungsstange eine Nut umfasst, und dass der mindestens eine Finger in die Nut greift. Bevorzugt ist die Betätigungsstange rotationssymmetrisch ausgebildet und noch weiter bevorzugt ist die Nut als umlaufende Radialnut ausgebildet. Dadurch kann erreicht werden, dass die Betätigungsstange ein einfaches und kostengünstiges Bauteil ist, das beispielsweise durch Drehen hergestellt werden kann.

Eine Weiterbildung der vorliegenden Erfindung sieht vor, dass die Betätigungsstange unmittelbar mit dem Anker oder mittels einer Ankerstange mit dem Anker mechanisch verbunden ist. Beispielsweise ist es vorteilhaft, wenn die mechanische Verbindung zwischen der Betätigungsstange und dem Anker eine Schraub- und/oder Pressverbindung umfasst. Insbesondere ist es bevorzugt, wenn die Betätigungsstange in den Anker eingeschraubt ist und die umlaufende Radialnut aufweist. Dadurch kann die montierte Greifeinheit mit der Betätigungsstange und dem mindestens einen mit der Betätigungsstange gekoppelten Finger auf den Hubmagneten aufgesetzt und die Betätigungsstange mit dem Anker verschraubt werden, wobei die Betätigungsstange beim Einschrauben gegenüber dem mindestens einen Finger frei drehbar ist.

Eine Weiterbildung der vorliegenden Erfindung sieht vor, dass die Greifeinheit, insbesondere das Greifergehäuse der Greifeinheit, einen Aufnahmeabschnitt aufweist, und dass der Hubmagnet entlang der Längsachse in den Aufnahmeabschnitt der Greifeinheit ragt. Der Aufnahmeabschnitt ist bevorzugt hohlzylindrisch und die Greifeinheit kann den Hubmagneten zumindest teilweise einhausen, wobei bevorzugt der Anker in den Aufnahmeabschnitt der Greifeinheit ragt. Dadurch kann eine besonders kurze und kompakte Bauweise realisiert werden.

Darüber hinaus hat es sich als vorteilhaft erwiesen, wenn der Anker in einer Hubanfangslage und einer Hubendlage anordnenbar ist und dass der Anker bei der Betätigung des elektromagnetischen Erregersystems, insbesondere bei einer Bestromung der Erregerspule des elektromagnetischen Erregersystems entlang der Längsachse in die Hubendlage bewegt wird. Dabei ist es insbesondere vorteilhaft, wenn der Anker von der Hubanfangslage in die Hubendlage entgegen der Kraft einer Rückstellfeder bewegt wird, wobei die Rückstellfeder bevorzugter Weise innerhalb des Magnetgehäuses angeordnet ist.

Eine Weiterbildung der vorliegenden Erfindung sieht vor, dass der Anker von der Hubanfangslage in die Hubendlage von der Greifeinheit, insbesondere dem Greifergehäuse, wegbewegt wird. Dadurch wird die Betätigungsstange in oder zu dem Magnetgehäuse gezogen, wodurch ein besonders kompakter Aufbau ermöglicht wird.

Auch ist es vorteilhaft, wenn das Magnetgehäuse entlang der Längsachse eine distale Seite und eine der distalen Seite gegenüberliegende proximale Seite aufweist. Die Greifeinheit und insbesondere das Greifergehäuse sind entlang der Längsachse auf einer distalen Seite des Magnetgehäuses angeordnet und weiter bevorzugt mit diesem verbunden.

Weiterhin ist es vorteilhaft, wenn die Greifvorrichtung einen Montageflansch umfasst. Der Montageflansch ist vorzugsweise entlang der Längsachse auf der proximalen Seite des Magnetgehäuses angeordnet.

Der Hubmagnet bzw. das Magnetgehäuse liegt folglich räumlich zwischen Montageflansch und Greifeinheit und bildet eine mechanische Verbindung zwischen Montageflansch und Greifeinheit.

Gemäß einer Weiterbildung ist der Montageflansch mit der proximalen Seite des Magnetgehäuses verbunden und kann ferner Befestigungsmittel aufweisen, die zum Befestigen des Montageflansches an dem Roboterarm oder dem Cobot geeignet sind. Der Montageflansch dient zum Verbinden der Greifvorrichtung mit einem Roboterarm und kann das Magnetgehäuse mit dem Roboterarm verbinden.

Gemäß einer bevorzugten Ausführungsform kann der Montageflansch abschnittsweise hohl, insbesondere hohlzylindrisch, ausgebildet sein. Beispielsweise kann hierfür der Montageabschnitt eine Aussparung umfassen, wobei die Ankerstange oder der Anker des Hubmagneten in der Hubendlage in die Aussparung eintauchen kann. Demnach ist es bevorzugt, wenn die Aussparung auf der dem Magnetgehäuse zugewandten Seite anordnet ist.

Ein weiterer Aspekt der vorliegenden Erfindung betrifft einen Roboter, insbesondere einen Gelenkarmroboter, beispielsweise ein Cobot, mit einer zuvor beschriebenen Greifvorrichtung.

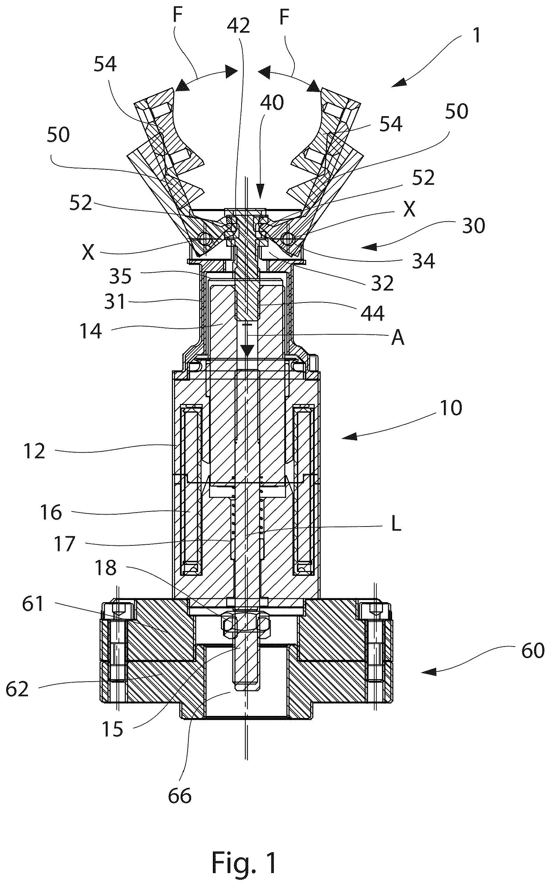

Figur 1 zeigt eine teilweise geschnittene Darstellung eines Ausführungsbeispiels einer elektromagnetischen Greifvorrichtung 1, insbesondere eines Winkelgreifers, für einen Roboter (nicht dargestellt), zum Greifen eines Gegenstandes (nicht dargestellt).

Die Greifvorrichtung 1 ist modular ausgebildet und umfasst einen Hubmagneten 10, eine Greifeinheit 30 und einen Montageflansch 60. Der Hubmagnet 10 ist als zentrales Modul zwischen dem Montageflansch 60 und der Greifeinheit 30 angeordnet und verbindet den Montageflansch 60 mit der Greifeinheit 30 mechanisch.

Die vorgeschlagene Greifvorrichtung 1 ermöglicht es, einen herkömmlichen Hubmagneten 10 unverändert zu verwenden und lediglich Greifeinheit 30 und den Montageflansch 60 applikationsspezifisch anzupassen.

Die Greifvorrichtung 1 weist eine Längsachse L auf, wobei die Längsachse L im Wesentlichen einer Symmetrieachse der Greifvorrichtung 1 entspricht.

Der Hubmagnet 10 ist in bekannter Weise ausgebildet und umfasst ein als Ganzes bezeichnetes Magnetgehäuse 12, ein elektromagnetisches Erregersystem mit einer Erregerspule, einer Rückstellfeder 17, einen Anker 14 und eine Ankerstange 14.

Der Hubmagnet 10 weist entlang der Längsachse L eine distale Seite und eine der distalen Seite gegenüberliegende proximale Seite auf.

Das Magnetgehäuse 12 kann eine Durchgangsöffnung aufweisen, aus der distal der Anker 14 und proximal die Ankerstange 15 herausragt.

In dem Magnetgehäuse 12 oder in der Durchgangsöffnung des Magnetgehäuses 12 sind der entlang der Längsachse L bewegliche Anker 14, die Rückstellfeder 17 und das elektromagnetische Erregersystem 16 zur Betätigung des Ankers 14 angeordnet.

An dem Magnetgehäuse 12 oder in der Durchgangsöffnung des Magnetgehäuses 12 ist die Ankerstange 14 beweglich gelagert.

Der Anker 14 kann in einer Hubanfangslage (in Figur 1 dargestellt) und in einer Hubendlage (nicht dargestellt) angeordnet sein. Bei Betätigung des elektromagnetischen Erregersystems 16, d.h. bei Bestromung der Erregerspule, wird der Anker 14 entgegen einer Rückstellkraft der Rückstellfeder 17 entlang der Längsachse L in eine Hubendlage bewegt.

Hierzu ist die Rückstellfeder 17 in der Durchgangsöffnung des Magnetgehäuses 12 angeordnet und zwischen dem Magnetgehäuse 12 und dem Anker 14 auf der Ankerstange 15 angeordnet und einenends an dem Magnetgehäuse 12 und anderenends an dem Anker 14 abgestützt.

Der Anker 14 ist fest mit der Ankerstange 15 verbunden und der Anker 14 wird durch die Ankerstange 15 in der Durchgangsöffnung des Magnetgehäuses 12 beweglich gehalten. Die Ankerstange 15 kann einen Endanschlag 18 aufweisen, mit dem die Hubanfangslage festgelegt werden kann. Der Endanschlag 18 liegt in der Hubanfangslage am Magnetgehäuse 12 an.

Die proximale Seite des Hubmagneten 10 ist mit dem Montageflansch 60 verbunden, über den eine Verbindung zu einem Roboter (nicht dargestellt), insbesondere einem Roboterarm eines Gelenkarmroboters, hergestellt werden kann.

Der Montageflansch 60 weist in dem beispielhaften Ausführungsbeispiel entlang der Längsachse L eine Aussparung 66 auf, um die aus dem Magnetgehäuse 12 herausragende Ankerstange 15 und/oder den Endanschlag 18 sowohl in der Hubanfangslage als auch in der Hubendlage - bevorzugt freibeweglich - aufnehmen zu können.

Der Montageflansch 60 kann, wie in der Figur angedeutet, zweiteilig ausgebildet sein. Ein erstes Montageflanschteil 61 ist mit dem Hubmagneten 10 verbunden und ein zweites Montageflanschteil 62 kann mit dem Roboter verbunden sein. Das erste Montageflanschteil 61 und das zweite Montageflanschteil 62 können beispielsweise mittels einer Schraubverbindung miteinander verbunden werden.

Die Greifeineinheit 30 umfasst ein als Ganzes bezeichnetes Greifergehäuse 31, eine Betätigungsstange 40 und zwei Finger 50.

Die Greifeinheit 30 weist entlang der Längsachse L eine proximale Seite und eine der proximalen Seite gegenüberliegende distale Seite auf.

Die Greifeinheit 30 ist auf der distalen Seite des Hubmagneten 10 angeordnet und das Greifergehäuse 31 ist mit dem Magnetgehäuse 12 verbunden.

Das Greifergehäuse 31 weist entlang der Längsachse L eine Öffnung auf, in der die Betätigungsstange 40 angeordnet ist.

Weiterhin weist das Greifergehäuse 31 auf der proximalen Seite der Greifeinheit 30 einen topfförmigen Aufnahmeabschnitt 35 auf, in den der Hubmagnet 10, oder genauer ausgedrückt der Anker 14 des Hubmagneten 10, entlang der Längsachse X ragt.

Auf der distalen Seite der Greifeinheit 30 weist das Greifergehäuse 31 auf der der Längsachse L gegenüberliegenden Seite jeweils eine Ausnehmung 32 auf, in der jeweils ein Finger 50 um eine Schwenkachse X, bevorzugt auf einem Gelenkbolzen 34, schwenkbar gelagert ist.

Die Betätigungsstange 40 ist entlang der Längsachse L in dem Greifergehäuse 31 beweglich.

Die Betätigungsstange 40 kann im Wesentlichen rotationssymmetrisch sein und umfasst eine Nut 42 und ein (nicht dargestelltes) Befestigungsmittel zum Herstellen einer mechanischen Verbindung mit dem Anker 14.

Die Betätigungsstange 40 entlang der Längsachse L auf der der Ankerstange 15 gegenüberliegenden Seite des Ankers 14 mit dem Anker 14 verbunden.

Die Nut 42 ist als umlaufende Radialnut ausgebildet. Die Nut 42 ist vorzugsweise distal an der Betätigungsstange 40 und das Befestigungsmittel proximal ausgebildet.

Das Befestigungsmittel umfasst vorzugsweise ein Gewinde zur Herstellung einer Schraubverbindung 44 zwischen dem Anker 14 und der Betätigungsstange 40.

Die beiden Finger 50 sind um die Betätigungsstange 40 herum in der jeweiligen Ausnehmung des Greifergehäuses 31 angeordnet und stehen in der Längsachse L frei von dem Greifergehäuse 31 ab. Die beiden Finger 50 sind im Wesentlichen baugleich, weshalb nachfolgend nur ein Finger 50 beschrieben wird.

Der Finger 50 ist um die Schwenkachse X beweglich, wobei die Schwenkachse X quer und beabstandet zu der Längsachse L orientiert ist.

Der Finger 50 ist mit der Betätigungsstange 40 derart mechanisch gekoppelt, dass die Bewegung der Betätigungsstange 40 in eine Schwenkbewegung des jeweiligen Fingers 50 zum Greifen des Gegenstandes gewandelt wird.

Der Finger 50 ist als zweiseitiger Hebel ausgebildet und umfasst einen Mitnehmer 52 und ein Haltemittel 54. Der Mitnehmer 52 ist einenends an dem Finger 50 angeordnet und das Haltemittel 54 anderenends, wobei die Schwenklachse X zwischen dem Mitnehmer 52 und dem Haltemittel 54 angeordnet ist.

Der Mitnehmer 52 kann einen verrundeten Kopf umfassen und greift in die Nut 42 der Betätigungsstange 40 und koppelt den Finger 50 mit der Betätigungsstange 40 mechanisch. Der Mitnehmer 52 ist in der Nut 42 formschlüssig gehalten.

Der Mitnehmer 52 ist in einem ersten Abstand A1 zu der Schwenkachse X und das Haltemittel 54 ist in einem zweiten Abstand A2 zur Schwenkachse X angeordnet, wobei der zweite Abstand A2 größer ist als der erste Abstand A1, also A2 > A1.

Das Haltemittel 54 kann weiche Backen aufweisen, die ein schonendes Greifen des Gegenstandes ermöglichen. Das Haltemittel kann auch in beliebiger Weise an die Form des Gegenstandes angepasst werden, um eine sichere Handhabung zu gewährleisten.

Zu Montage der Greifvorrichtung 1 wird die Greifeinheit 30 mit der Betätigungsstange 40 und dem in die Betätigungsstange 40 eingreifenden Finger 50 zunächst auf der proximalen Seite des Hubmagneten 10 angeordnet und die Betätigungsstange 40 mit dem Anker 14 verschraubt. Durch die Ausbildung der Nut 42 als umlaufende Radialnut kann die Betätigungsstange 40 gegenüber den Fingern 50 beim Einschrauben frei verdreht werden.

Der Montageflansch 60, das Magnetgehäuse 12 , der Anker 14, die Ankerstange 15, die Betätigungsstange 40 und die Greifeinheit 30 sind entlang Längsachse L, wie in der Figur gezeigt ist, bevorzugt koaxial, angeordnet.

Die begleitende Figur 1 zeigt die Greifvorrichtung 1 zum Greifen des Gegenstandes im unbetätigten - also geöffneten - Zustand. In diesem Zustand ist das elektromagnetische Erregersystem unbestromt und der Anker 14 befindet sich in der Hubanfangslage.

Bei einer Bestromung des elektromagnetische Erregersystem wird der Anker 14 entgegen der Kraft der Rückstellfeder 17 entlang der Längsachse L in die Hubendlage bewegt und mit dem Anker 14 wird die Betätigungsstange 40 entlang der Längsachse L bewegt, wobei diese Hubbewegung in der begleitenden Figur mit einem Pfeil und dem Bezugszeichen A angedeutet ist.

Durch den Formschluss zwischen der Betätigungsstange 40 und den Fingern 50 - genauer gesagt zwischen der Nut 42 und den Mitnehmern 52 - werden auch die Mitnehmer 52 entlang der Längsachse L bewegt, wodurch die zwei Finger 50 synchron und gegenläufig um die Schwenkachse X verschwenkt werden. Diese Schwenkbewegung ist in der begleitenden Figur mit einem Doppelpfeil und mit dem Bezugszeichen F gekennzeichnet.

Die Greifvorrichtung 1 ist nun geschlossen und der Gegenstand kann zwischen den Fingern 50 eingeklemmt gehalten werden.

Um in den unbetätigten - also geöffneten - Zustand der Greifvorrichtung 1 zurückzukommmen, wird die Bestromung des elektromagnetische Erregersystem reduziert bzw. die Bestromung wird beendet. Der Anker 14 wird durch die Rückstellfeder 17 zurück in die Hubanfangslage bewegt. Die Finger 50 bewegen sich um die Schwenkachse X auseinander und der Gegenstand kann losgelassen werden.

### Bezugszeichenliste

- 1: Greifvorrichtung
- 10: Hubmagnet
- 12: Magnetgehäuse
- 14: Anker
- 15: Ankerstange
- 16: Erregersystem
- 17: Rückstellfeder
- 18: Endanschlag
- 30: Greifeinheit
- 31: Greifergehäuse
- 32: Ausnehmung
- 34: Gelenkbolzen
- 35: Aufnahmeabschnitt
- 40: Betätigungsstange
- 42: Nut
- 50: Finger
- 52: Mitnehmer
- 54: Haltemittel
- 60: Montageflansch
- 61: erstes Montageflanschteil
- 62: zweites Montageflanschteil
- 66: Aussparung

- A: Hubbewegung
- F: Schwenkbewegung
- L: Längsachse
- X: Schwenkachse

## Patentansprüche

1. Greifvorrichtung (1), insbesondere elektromagnetischer Winkelgreifer für einen Roboter, zum Greifen eines Gegenstandes, aufweisend
- einen Hubmagnet (10) mit einem Magnetgehäuse (12) und
- eine Greifeinheit (30),
- wobei in dem Magnetgehäuse (12) ein in einer Längsachse (L) beweglicher Anker (14) und ein elektromagnetisches Erregersystem (16) zur Betätigung des Ankers (14) angeordnet ist,
- wobei die Greifeinheit (30) eine in der Längsachse (L) beweglichen Betätigungsstange (40) und mindestens einen um eine Schwenkachse (X) beweglichen Finger (50) umfasst,
- wobei der mindestens eine Finger (50) mit der Betätigungsstange (40) derart mechanisch gekoppelt ist, dass die Bewegung der Betätigungsstange (40) in eine Schwenkbewegung des mindestens einen Fingers (50) zum Greifen des Gegenstandes gewandelt wird,
- wobei die Greifeinheit (30) in der Längsachse (L) auf dem Magnetgehäuse (12) angeordnet ist und
- wobei die Betätigungsstange (40) mit dem Anker (14) mechanisch verbunden ist.

2. Greifvorrichtung (1) nach einem der vorgenannten Ansprüche,
**dadurch gekennzeichnet, dass** der mindestens eine Finger (50) einen Mitnehmer (52) umfasst, durch den der mindestens eine Finger (50) mit der Betätigungsstange (40) mechanisch gekoppelt ist.

3. Greifvorrichtung (1) nach einem der vorgenannten Ansprüche,
**dadurch gekennzeichnet, dass** der mindestens eine Finger (50) schwenkbar gelagert ist.

4. Greifvorrichtung (1) nach einem der vorgenannten Ansprüche,
**dadurch gekennzeichnet, dass** der mindestens eine Finger (50) als Hebel ausgebildet ist, der den Mitnehmer (52) und ein Haltemittel (54) zum Greifen des Gegenstandes umfasst.

5. Greifvorrichtung (1) nach einem der vorgenannten Ansprüche,
**dadurch gekennzeichnet, dass** der mindestens eine Finger (50) als zweiseitiger Hebel (52) ausgebildet ist, der den Mitnehmer (52) einerseits in einem ersten Abstand zu der Schwenkachse (X) und das Haltemittel (54) andererseits in einem zweiten Abstand zu der Schwenkachse (X) umfasst.

6. Greifvorrichtung (1) nach einem der vorgenannten Ansprüche,
**dadurch gekennzeichnet, dass** der zweite Abstand größer ist als der erste Abstand.

7. Greifvorrichtung (1) nach einem der vorgenannten Ansprüche,
**dadurch gekennzeichnet, dass** der Hebel L-förmig ausgebildet ist.

8. Greifvorrichtung (1) nach einem der vorgenannten Ansprüche,
**dadurch gekennzeichnet, dass** die Betätigungsstange (40) eine Nut (42) umfasst, und dass der mindestens eine Finger in die Nut (42) greift.

9. Greifvorrichtung (1) nach einem der vorgenannten Ansprüche,
**dadurch gekennzeichnet, dass** die Betätigungsstange (40) unmittelbar mit dem Anker (14) oder mittels einer Ankerstange (15) mit dem Anker (14) mechanisch verbunden ist.

10. Greifvorrichtung (1) nach einem der vorgenannten Ansprüche,
**dadurch gekennzeichnet, dass** die mechanische Verbindung zwischen der Betätigungsstange (40) und dem Anker (14) eine Schraub- und/oder Pressverbindung umfasst.

11. Greifvorrichtung (1) nach einem der vorgenannten Ansprüche,
**dadurch gekennzeichnet, dass** die Greifeinheit (30) einen Aufnahmeabschnitt (35) aufweist und dass der Hubmagnet (10) entlang der Längsachse (L) in den Aufnahmeabschnitt (35) ragt.

12. Greifvorrichtung (1) nach einem der vorgenannten Ansprüche,
**dadurch gekennzeichnet, dass** der Anker (14) in einer Hubanfangslage und in einer Hubendlage anordnenbar ist, und dass der Anker (14) bei der Betätigung des elektromagnetischen Erregersystems entlang der Längsachse (L) in die Hubendlage bewegt wird.

13. Greifvorrichtung (1) nach einem der vorgenannten Ansprüche,
**dadurch gekennzeichnet, dass** der Anker (14) von der Hubanfangslage in die Hubendlage entgegen der Kraft einer Rückstellfeder (17) bewegt wird.

14. Greifvorrichtung (1) nach einem der vorgenannten Ansprüche,
**dadurch gekennzeichnet, dass** der Anker (14) von der Hubanfangslage in die Hubendlage von der Greifeinheit (30) wegbewegt wird.

15. Greifvorrichtung (1) nach einem der vorgenannten Ansprüche,
**dadurch gekennzeichnet, dass** die Greifeineinheit (30) entlang der Längsachse (L) auf einer distalen Seite mit dem Magnetgehäuse (12) verbunden ist.

16. Greifvorrichtung (1) nach einem der vorgenannten Ansprüche,
**dadurch gekennzeichnet, dass** ein Montageflansch (60) entlang der Längsachse (L) auf einer proximalen Seite des Magnetgehäuses (12) angeordnet ist und einerseits mit dem Magnetgehäuse (12) verbunden ist und andererseits Befestigungsmittel zur Befestigung an dem Roboter aufweist.

17. Greifvorrichtung (1) nach einem der vorgenannten Ansprüche,
**dadurch gekennzeichnet, dass** ein Montageflansch (60) zumindest abschnittweise hohl ist.

18. Roboter (2), insbesondere Gelenkarmroboter, mit einer elektromagnetischen Greifvorrichtung (1), insbesondere einem elektromagnetischen Winkelgreifer, nach einem der vorgenannten Ansprüche.
